# EUROPEAN PATENT APPLICATION

(11) **EP 1 209 243 A2**
(43) Date of publication of application: **29.05.2002**
(21) Application number: 01500209.0
(22) Date of filing: 03.08.2001
(51) Int. Cl.: C21C 5/52, H05B 7/09, H05B 7/107, C22B 4/08, H05B 7/144

(54) **Multifrequency equipment for sensing the state of the electrodes in electric-arc furnaces**

(30) Priority: 19.10.2000 ES 200002509
(71) Applicant: Ferroatlantica, S.L., 28046 Madrid (ES)
(72) Inventor: Bullon Camarasa, Javier, 15142 Arteixo (La Coruna) (ES); Lorenzo Barreiro, Angel, 15142 Arteixo (La Coruna) (ES); Farina Rodriguez, Jose, 36280 Vigo (Pontevedra) (ES); Rodriguez Andina, Juan Jose, 36280 Vigo (Pontevedra) (ES)
(74) Representative: Manzano Cantos, Gregorio

(57) **Abstract**

Multifrequency equipment is provided for sensing the state of self baking electrodes in an electric arc furnace to obtain real values of the internal situation of an electrode where changes of phase are being produced. By means of said external equipment a small low power and variable frequency electric signal is introduced through a good conducting core component of the electrode and which on changing the frequency of said electric current, will allow the electrode situation to be known at different heights, even beneath the baked plates.

## Description

In electric arc reduction furnaces, the electrodes are one of the essential components. Through them, electric energy is conducted triggering the electric arc in its lower part and producing sufficient temperature so that chemical reduction may occur in the furnace.

The electric current is introduced in the electrode by means of the contact plates or plows, generally several ones, and are pressed against the electrode itself by means of pressure rings or crowns. The plates are normally made of copper and the pressure rings may be of copper or another material and both are usually strongly cooled with water.

Usually, the electrodes are made of carbon in its different qualities. They are consumed in the arc area as the reaction is produced in the furnace and they are replaced through the upper part of the column. They may be classified in prebakes, when they have been prepared already baked and machined outside the reduction furnace or may be self-baked in the furnace itself, in which case the raw material to be baked will be introduced in the upper part of the column and will bake as it descends along it.

The paste before baking is known as green paste and is mixture of different types of carbons limed at high temperatures with pitches which act as binders. They are usually supplied in briquettes or cylinders with a lower diameter than that of the electrode itself which are of the type introduced through the upper part of the column. As the temperature increases, the softening point of the paste is reached, from which the paste becomes liquid and tends to fill all the gaps and uniformly be distributed in a horizontal section of the electrode column..

To permit this baking, the electrode column should be provided with a metal hoop, generally cylindrical with a specific diameter depending on the furnace type. The purpose of this hoop is to facilitate the electrode formation acting as a container in the phase changes of the carbon paste introduced inside it.

Although the object of the invention may be applied to any type of electric conduction involving a change of phase in the raw material of an electrode, the specific application of this invention has been made for carbon paste electrodes used in submerged electric arc furnaces for the production of ferroalloys. Another application would be in the manufacture of the electrodes themselves when they are baked outside the furnace or in any other type of production like vats for the manufacture of aluminium.

The resistance values of the paste on passing the current vary a lot, depending on whether it is in a green state with many gaps between the parts or when it is liquefied and then baked. In all this process, volatile gases are produced and the cokification of the pitch is produced, so that when the corresponding temperature is reached, the electrode is a very conductive carbon mass with a determined shape given by the hoop itself.

All these transformation are of maximum importance to obtain a good baked electrode satisfying its function in the furnace without problems. However, they are produced along the column which has a variable length between three and ten metres and in an area where there is no access to observe or study the way in which the paste baking is produced. Several studies have been made by introducing thermocouples along the column and from whose temperature the baking state of the paste may be deduced. Mathematical models have also been made, starting from the Maxwell equations and the contour conditions of the electrode itself which indicate temperature values and even intensity along the electrode. All the latter, approaches us to the reality of what occurs inside the column, but in the daily use of furnaces it is impossible for them to indicate what is being produced inside it at each moment, so that it is impossible to prevent problems of maladjustment or furnace destabilisation and of the electrode itself.

### BACKGROUND OF THE INVENTION

Regarding the state of the art, we may mention the background where an electrode intervenes with a core of metal, amorphous or of another type of material. Two patents may be mentioned having a graphite core, Spanish Patent number 9102414/5 issued to Ferroatlantica, referring to: IMPROVEMENTS ON THE CONTINUOUS MANUFACTURING PROCESS OF IMPURITY FREE ELECTRODES AND IRON FOR ELECTRIC ARC FURNACES and US Patent number 4,575,856 issued to J.A. Persson for: IRON FREE SELF BAKING ELECTRODE.

### DESCRIPTION OF THE INVENTION

The object of the present invention is an equipment preferably outside the column, permitting us to know at any moment the situation of the paste inside the column and to detect any irregularity in paste uniformity, density or compacting that may later give problems in the electrode and in the furnace operation as a result.

For such a purpose, a low and known impedance conducting element is introduced in the electrode centre, like the graphite mentioned in the background or also copper, iron, aluminium or other good metal conductor. The diameter of this conductor component will depend on the electrode diameter in a proportion generally previously calculated in previous experiences and should be introduced through the upper part of the column, lowering through the electrode centre along the latter until it is melted in the lower part of the electrode and once baking of the paste has been produced, which takes place at about 500°C. The higher the melting point, more information may be obtained on the column situation. It is important that this conducting component does not contaminate the product being manufactured in the furnace.

Through said conducting component, a small power electric current is introduced having known intensity and frequency. The response signal to the latter will be collected through the contact plates, closing the circuit conveying said signal to the area where it is analysed.

In this way, said current generated at a determined frequency and voltage will be introduced in the upper part of the electrode through the aforementioned central conductor component and *will be transmitted* through it until it reaches the plate, crossing the carbon paste. From here to the copper pipe and closes a circuit in the equipment itself.

When this circuit is introduced in a mathematical electrode model, it has been proven that the current produced always follows the route of minimum impedance. For this reason, depending on the frequency at which the current is introduced, it will transmit more or less length through the central conductor and will go to the hoop or the external surface of the electrode at different heights. Through the equipment, we may know the impedance values at each one of the different frequencies and collect said signal in each one of the plates and therefore, in the entire horizontal section of the electrode. All this data is collected in a digital processor connected to a computer analysing the different signals and shows values indicating the internal situation of the electrode.

A better idea of the features of the invention will be shown below referring to the drawings attached to this specification, in a schematic way and only as an example, representing the preferred and essential details of the invention.

### IN THE DRAWINGS:

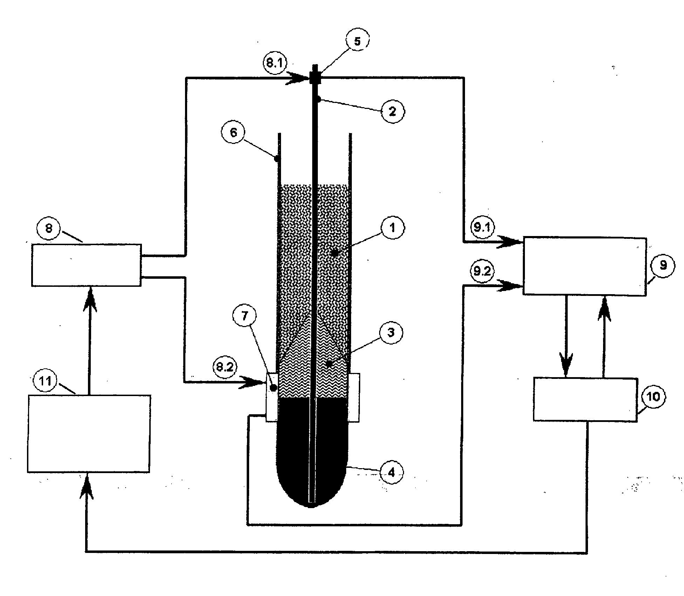

The only figure represented shows a scheme of the object of the invention in a practical application to an electrode assembly.

### PREFERRED EMBODIMENT OF THE INVENTION:

A practical example of the external arrangement of the prototype developed according to the invention is shown in the mentioned illustration suitably numbered by the corresponding references.

In this way, the block comprising the electrode assembly is generally designated with (1), (2) being the electric conductor core of good material, co-axially arranged for the integration of the electrode through which electric current is passed in order to continuously analyse the electrode situation or its operation.

The electrode is formed on baking the paste (3) in the core (2) area, as it descends along the column and by the heat generated by the current made to pass through the plates (7). The paste changes its physical state from the initial solid to liquid and then to solid and baked according to the temperature of each area. During the entire baking process, the paste is contained in a metallic hoop (7) favouring said process.

In the figure, the signal processor (10) is shown, which programmes the frequency and amplitude of the excitation signal (11) and introduces it in the core (2) through the signal adapter (8) and the terminals (8.1), the mentioned core connected through the contact (5) and (8.2) also connected to the plate (7). The processor (10) is also responsible for analysing the signal received across the terminals (9.1 and 9.2). From the comparison between the signal transmitted and the signal received, the electrode condition is deduced in each of its areas.

Having conveniently described the nature of the invention, it is stated for the pertinent purposes that it is not limited to the exact details of this example, but on the contrary, relevant modifications may be introduced provided they do not alter the basic features thereof, which are claimed below.

## Claims

1. MULTIFREQUENCY EQUIPMENT FOR SENSING THE STATE OF THE ELECTRODES IN ELECTRIC-ARC FURNACES, to obtain real values of the internal situation of an electrode where phase changes are being produced, **characterised in that** they are produced by an external equipment to which a small electric signal is introduced of low power and variable frequency.

2. MULTIFREQUENCY EQUIPMENT FOR SENSING THE STATE OF THE ELECTRODES IN ELECTRIC-ARC FURNACES according to the previous claim, because a conducting component with known characteristics that may be graphite, copper, iron, aluminium or another good electric conducting material, is introduced, placed in the central part of the electrode from its upper end until it melts due to the effect of the temperature, **characterised in that** the circuit will close by means of a cable which will collect the electric signal from all the furnace plates.

3. MULTIFREQUENCY EQUIPMENT FOR SENSING THE STATE OF THE ELECTRODES IN ELECTRIC-ARC FURNACES according to claim 1, which on changing the frequency of said electric current is **characterised in that** the current tends to pass from the central conductor (2) to the hoop (6) or the external part of the electrode (1) at different heights permitting to know the impedance at each one of said heights.

4. MULTIFREQUENCY EQUIPMENT FOR SENSING THE STATE OF THE ELECTRODES IN ELECTRIC-ARC FURNACES according to claim 3, which on collecting all these impedance values is **characterised in that** on analysing them by means of a corresponding signal processor (10), the situation of the electrode (1) may be known at its different heights, even beneath the plates, it being possible to prevent problems in the electrode and furnace.

5. MULTIFREQUENCY EQUIPMENT FOR SENSING THE STATE OF THE ELECTRODES IN ELECTRIC-ARC FURNACES according to claim 4, which on closing the circuit between the two electrodes in their different areas and applying the corresponding value studied, is **characterised in that** the mixture impedance may be known, as well as the reaction areas in the furnace mixture and general status of the vat.
